Europäisches Patentamt

European Patent Office

Office européen des brevets

(19)

(11) Numéro de publication : **0 478 437 A1**

# (12) DEMANDE DE BREVET EUROPEEN

(21) Numéro de dépôt : **91402530.9**

(51) Int. Cl.⁵ : **B62D 5/04**

(22) Date de dépôt : **24.09.91**

(30) Priorité : **25.09.90 FR 9011785**

(43) Date de publication de la demande :
**01.04.92 Bulletin 92/14**

(84) Etats contractants désignés :
**DE ES GB IT**

(71) Demandeur : **REGIE NATIONALE DES USINES
RENAULT S.A.
34, Quai du Point du Jour
F-92109 Boulogne Billancourt (FR)**

(72) Inventeur : **Aznar, Fernando
2, Boulevard du Gué
F-92500 Rueil-Malmaison (FR)**
Inventeur : **Brousse, Pascal
9, rue Henri Faine
F-78130 Les Mureaux (FR)**
Inventeur : **Saint-Martin, Philippe
11, rue de Strasbourg
F-78800 Houilles (FR)**
Inventeur : **Tonnerieux, François
11 Bis, rue Galipeau
F-92160 Antony (FR)**

(54) **Direction assistée électrique de parking.**

(57)    Direction assistée électrique de parking comportant un moteur électrique d'assistance à courant continu (1) muni d'un embrayage, un réducteur (2), un capteur de couple volant (3), un capteur de vitesse du véhicule, et un circuit électronique de commande, du moteur caractirisée d'une part en ce que le capteur de couple délivre des signaux tout ou rien, et d'autre part en ce que le taux d'assistance est proportionnel au temps durant lequel le signal de couple est présent lorsque le véhicule roule en dessous d'une vitesse limite préétablie et s'annule lorsque le véhicule dépasse cette vitesse.

EP 0 478 437 A1

FIG.1

La présente invention se rapporte à une direction assistée dite "de parking". Alors que les directions assistées classiques fournissent un couple d'assistance au couple volant exercé par le conducteur sur la colonne de direction, quelle que soit la vitesse du véhicule, les directions assistées dites de parking n'exercent leur assistance qu'aux vitesses réduites.

Le principe de l'assistance "de parking" est déjà appliqué sur certaines directions assistées hydrauliques et électriques. Son application sur une direction assistée électrique est illustrée par la publication FR 2.248.702. Selon cette publication, l'unité d'entraînement du système d'assistance est mise en service par l'intermédiaire d'un circuit dépendant de la vitesse du véhicule, l'entraînement étant coupé lorsque le véhicule dépasse une certaine vitesse.

De nombreuses directions assistées électriques, telles que celle décrite dans la publication FR 2.573.380 comportent un arbre d'entrée, un arbre de sortie relié mécaniquement à l'arbre d'entrée par une barre de torsion, un capteur de couple détectant le couple exercé sur la barre de torsion, et un moteur à courant continu exerçant un couple d'assistance sur l'arbre de sortie, en réponse aux signaux du capteur de couple.

Selon la publication FR 2.573.380, le signal de commande du moteur peut avantageusement consister en une tension d'induit ayant une valeur proportionnelle à l'amplitude du couple de braquage imposé à l'arbre d'entrée. Un capteur de couple particulièrement destiné à une direction assistée électrique est décrit dans la publication FR 2.630.699. Ce capteur mesure le couple relatif existant entre un arbre primaire et un arbre secondaire de direction, et émet des signaux correspondants, à un servomoteur entraînant en fonction de ceux-ci un arbre secondaire. Il est également connu d'enrichir la prestation en faisant varier le taux d'assistance en fonction de la vitesse du véhicule. Ceci est appliqué dans le dispositif faisant l'objet de la publication FR 2.248.702, selon laquelle le moteur électrique d'assistance répond aux conditions variables de déplacement du véhicule, transmises notamment par un capteur de vitesse.

L'invention vise à réaliser une direction assistée électrique de parking simplifiée par rapport aux dispositifs connus, tout en offrant un très grand confort de conduite à l'utilisateur.

Selon un mode de réalisation de l'invention, la direction assistée électrique de parking comporte un moteur électrique d'assistance à courant continu, un embrayage, un réducteur, un capteur de couple volant, un capteur de vitesse de véhicule et un circuit électronique de commande du moteur. Cette direction est caractérisée d'une part en ce que le capteur de couple délivre des signaux tout ou rien, et d'autre part en ce que le taux d'assistance est proportionnel au temps durant lequel le signal de couple est présent lorsque le véhicule roule en dessous d'une vitesse limite préétablie et s'annule lorsque le véhicule dépasse cette vitesse.

Selon un mode de réalisation de l'invention, le capteur de couple délivre deux signaux de sortie différents selon le sens du couple volant exercé par le conducteur.

Selon un mode de réalisation de l'invention, le capteur de couple comporte deux contacts, un élément élastique d'amplification de déformation angulaire en élastomère, et au moins deux collecteurs tournants associés à des balais.

Selon un mode de réalisation de l'invention, les contacts du capteur de couple sont mécaniques.

Selon un mode de réalisation de l'invention, les contacts du capteur de couple sont des contacts Reed actionnés par des aimants.

Selon un mode de réalisation de l'invention, le capteur de couple comporte un troisième collecteur tournant.

Selon un mode de réalisation de l'invention, le capteur comporte quatre collecteurs tournants, et les contacts sont des sondes à effet Hall.

Selon un mode de réalisation de l'invention, le sens du couple moteur d'assistance est déterminé par deux relais à contact inverseur commutant à très faible courant ou à courant nul, qui sélectionnent le sens du courant d'alimentation du moteur.

Selon un mode de réalisation de l'invention, l'intensité du courant d'alimentation du moteur est déterminée par l'intégration dans le temps des signaux émis par le capteur de couple.

Selon un mode de réalisation de l'invention, en dessous de la vitesse limite, le niveau d'assistance est proportionnel à l'intensité du courant d'alimentation du moteur, qui croît selon une pente fixe $\theta_1$ tant que le capteur fournit des signaux de couple.

Selon un mode de réalisation de l'invention, le niveau d'assistance décroît selon une pente $\theta_2$, dite de lâcher de volant, lorsque le capteur cesse d'émettre des signaux de couple.

Selon un mode de réalisation de l'invention, le niveau d'assistance décroît selon une pente $\theta_3$ plus faible que la pente $\theta_2$ de lâcher de volant, lorsque le véhicule dépasse la vitesse limite en cours de braquage.

Selon un mode de réalisation de l'invention, la décroissance se poursuit selon la pente $\theta_3$ jusqu'à la disparition du couple d'assistance, tant que le capteur émet des signaux de couple.

Selon un mode de réalisation de l'invention, la décroissance du niveau d'assistance se poursuit selon la pente $\theta_2$ lorsque le capteur cesse d'émettre des signaux de couple après que le véhicule ait dépassé la vitesse limite.

Selon un mode de réalisation de l'invention, le circuit électronique de commande du moteur d'assistance comporte un bloc de commande des relais recevant les signaux du capteur de couple et un signal courant moteur nul, une unité de commande d'embrayage, un intégrateur recevant les signaux du capteur de couple, le signal de vitesse mis en forme et le signal de sécurité du moteur, et un organe de mesure du courant moteur.

Selon un mode de réalisation de l'invention, le circuit électronique de commande du moteur d'assistance comporte un convertisseur analogique digital assurant la transformation du signal analogique fourni par l'intégrateur en une tension à créneau de rapport cyclique variable, une unité de mise en forme du signal de vitesse véhicule, et un double comparateur de courant.

Selon un mode de réalisation de l'invention, le circuit électronique de commande comporte deux relais et un semiconducteur de puissance assurant la modulation en créneau de rapport cyclique variable, de la tension d'alimentation du moteur.

Selon un mode de réalisation de l'invention, l'organe de mesure du courant moteur délivre un signal qui est comparé dans un bloc à deux niveaux pour générer les informations courant nul et surcourant.

Selon un mode de réalisation de l'invention, le circuit électronique de commande du moteur comporte un système de protection du moteur assurant la coupure de l'alimentation du moteur, devant un surcourant, et le rétablissement de l'assistance lorsqu'il détecte l'inversion du sens du couple volant par rapport à celui qui a causé le surcourant.

D'autres caractéristiques et avantages de l'invention apparaîtront à la lecture de la description suivante d'un mode particulier de réalisation de l'invention en liaison avec les dessins annexés sur lesquels :

– la figure 1 situe l'implantation mécanique de la direction assistée de parking sur le véhicule,
– la figure 2a montre l'allure du signal fourni par le capteur du couple proposé, n'utilisant qu'une sortie à trois niveaux,
– la figure 2b montre l'allure des signaux fournis par le capteur de couple proposé utilisant deux sorties, à deux niveaux,
– la figure 3 est un exemple de réalisation de capteur de couple avec un élément de torsion élastique deux sorties du type sonde de Hall et quatre collecteurs tournants,
– la figure 4a est un schéma électrique du capteur proposé à deux collecteurs tournants, deux contacts mécaniques ou contacts Reed, et deux résistances.
– la figure 4b est un schéma électrique du capteur proposé à trois collecteurs tournants, basé sur deux contacts mécaniques ou Reed.
– la figure 4c est un schéma électrique de capteur proposé à quatre collecteurs tournants, avec deux sondes de Hall,
– la figure 5 représente les lois de croissance et de décroissance de l'assistance en fonction du couple volant et/ou de la vitesse du véhicule,
– la figure 6 est un exemple de réalisation du circuit électrique de commande du moteur d'assistance,

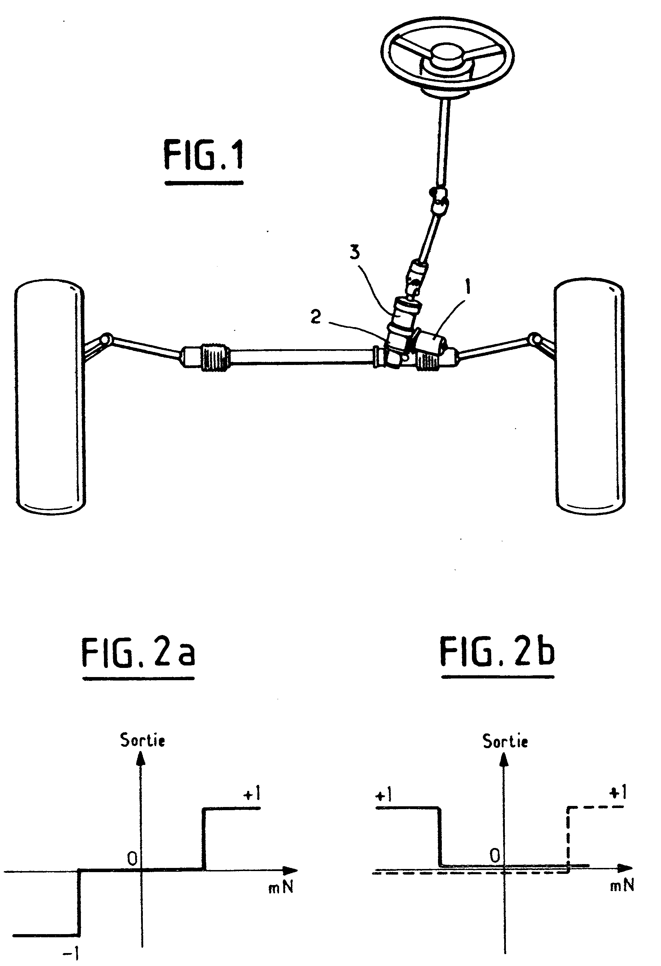

La figure 1 situe l'implantation, sur la colonne de direction, du capteur de couple (3) du moteur d'assistance (1) et du réducteur (2). Certains éléments, qui jouent un rôle important dans la réalisation de l'invention, tels que l'embrayage du moteur d'assistance, le capteur du vitesse du véhicule ou encore le circuit électronique de commande du moteur, n'apparaissent pas sur ce schéma, pour des raisons de clarté.

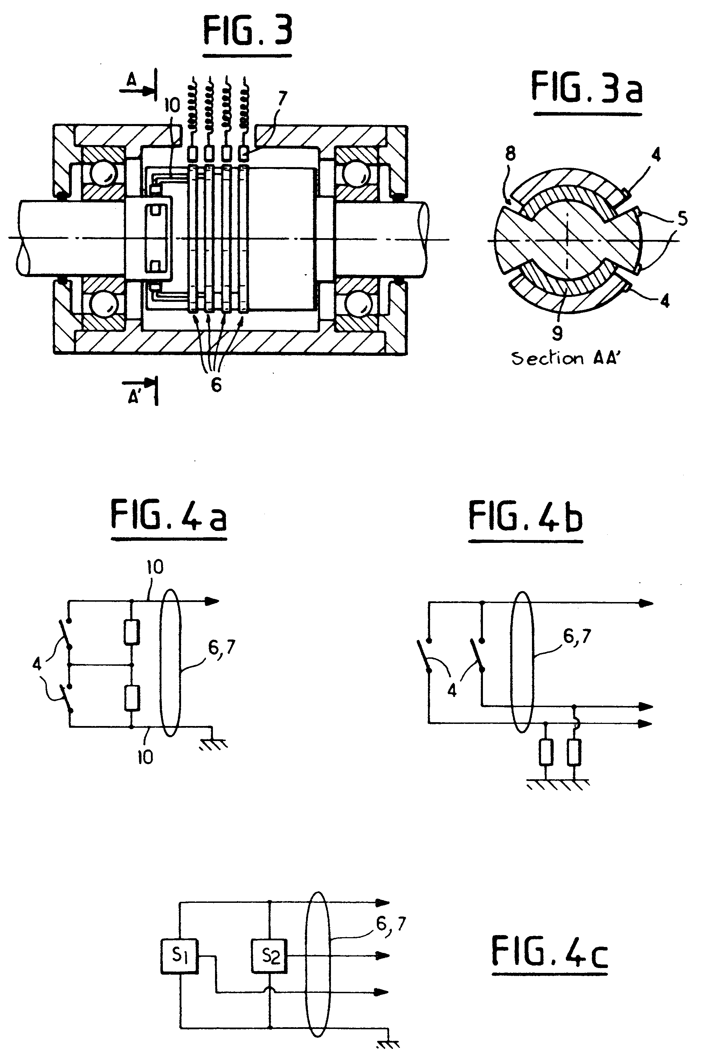

Les capteurs de couple habituellement montés sur les colonnes de direction assistée évaluent le couple exercé sur l'arbre de direction, par la mesure de la déformation angulaire d'une barre de torsion. Ils émettent en réponse un signal représentant une fonction linéaire du couple volant. Au contraire, le capteur de couple utilisé dans l'invention ne délivre que des signaux tout ou rien indiquant le dépassement d'un seuil de couple symétrique. Ce capteur peut ne présenter qu'une seule sortie : le signal est alors à trois niveaux (figure 2a). Il peut également présenter deux sorties, le signal est alors à deux niveaux (figure 2b). Le couple à fournir par le conducteur étant égal au couple résistant diminué du couple d'assistance existant, le seuil symétrique correspond à la valeur maximum de couple restant à fournir par le conducteur, tant que l'assistance n'est pas saturée. Le fait de se contenter d'une réponse tout ou rien permet de beaucoup simplifier la réalisation du capteur (3), les seules contraintes étant le réglage du seuil d'assistance et sa symétrie. L'utilisation de collecteurs à balais (6) est rendue possible par la simplicité des informations attendues du système. L'élément élastique d'amplification de déformation angulaire (9) peut avantageusement être en élastomère. Les contacts (4) peuvent être réalisés de différentes façons. On adoptera des contacts mécaniques avec ou sans résistances (figure 4a ou 4b), des contacts Reed activés par des aimants (5) (figure 4a ou 4b), ou encore des sondes à effet Hall ($S_1$, $S_2$) (figure 4c) activées par des aimants. Les contacts Reed et les contacts mécaniques nécessitent deux ou trois collecteurs tournants (6) étant donné que de tels contacts ont un point électrique commun. La solution "sonde à effet Hall" nécessite par contre un collecteur de plus pour l'alimentation. La liaison électrique entre les contacts (4) et les collecteurs (6) est réalisée par des fils (10).

La transmission de l'effort entre l'arbre d'entrée et l'arbre de sortie se fait par l'intermédiaire d'un élément élastique de déformation angulaire (9). Toutefois, il faut pouvoir transmettre des couples supérieurs à la gamme de mesure. Pour cela on utilise des butées de reprise de couple ayant un jeu angulaire (8) permettant d'obtenir entre l'arbre de sortie et l'arbre d'entrée un libre déplacement angulaire jusqu'à un certain angle au-delà duquel les butées se trouvent en contact et lient entièrement les deux arbres.

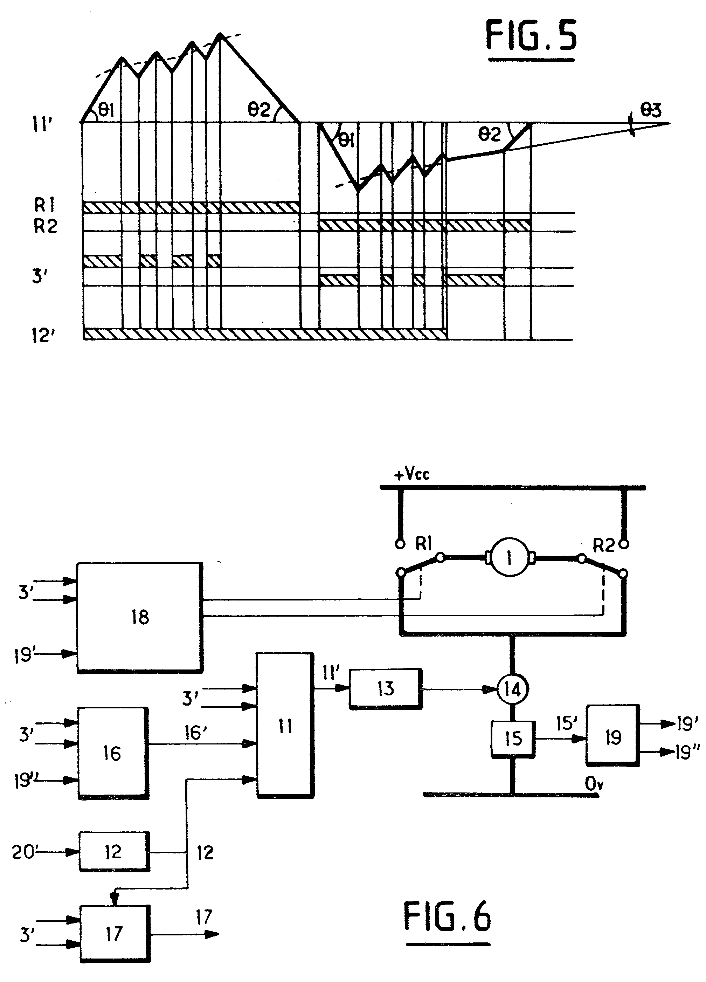

Dans tous les cas, la sortie du capteur de couple (3) est en liaison avec le circuit électronique de commande représenté sur la figure 6. Ce schéma montre que les signaux (3′) du capteur de couple (3) sont introduits dans un bloc (18) assurant la commande des deux relais R$_1$ et R$_2$. Ces deux relais contrôlent le sens de l'alimentation du moteur d'assistance à courant continu (1), et donc, le sens du couple d'assistance.

Les signaux (3′) du capteur de couple (3) sont également transmis à un intégrateur (11), à un bloc de commande d'embrayage (17), et à un bloc de protection contre une surcharge du moteur (16). Le signal de vitesse du véhicule (20′), une fois traité dans une unité de mise en forme (12), est transmis à l'intégrateur (11), et au bloc de commande d'embrayage (17).

En sortie de l'intégrateur (11), on trouve un convertisseur analogique digital ( 13). Celui-ci transforme le signal analogique (11′) issu de l'intégrateur (11) en une tension à créneau de rapport cyclique variable. Cette dernière commande un semiconducteur de puissance (14) en largeur d'impulsion, afin de réguler le courant dans le moteur. Un organe de mesure (15) du courant moteur délivre un signal (15′) qui est comparé dans un bloc (19) à deux niveaux, pour générer les informations courant nul (19′) et surcourant (19″). Enfin le circuit électronique comporte un système de protection du moteur contre les surcourants (16), recevant les informations surcourant (19″).

Le sens du couple d'assistance est déterminé par les deux relais R$_1$ et R$_2$ qui sont à contact inverseur. La commande des relais est également élaborée à partir des signaux (3′) du capteur de couple (3) et du courant moteur. La commutation des relais s'effectue à très faible courant ou à courant nul, ce qui assure à ces derniers une durée de vie importante.

Lorsque le véhicule roule à basse vitesse, le taux d'assistance, qui est proportionnel au courant d'alimentation du moteur, est déterminé par intégration dans le temps du signal du couple. Cette intégration permet d'obtenir une assistance continue à partir de signaux tout ou rien. En réponse aux signaux (3′) du capteur de couple (3) l'assistance croît selon une pente fixe θ$_1$ (figure 5). Lorsque le couple volant exercé par le conducteur décroît jusqu'à atteindre le "seuil d'assistance", le capteur (3) met sa (ses) sortie (s) à zéro. Le niveau d'assistance décroît alors selon la pente θ$_2$, fixe dite de lâcher du volant.

Lorsque le véhicule dépasse la vitesse limite, le système se met hors service. Ceci signifie que le conducteur ne dispose plus d'assistance pour braquer. Néanmoins, si le conducteur se trouve en situation de braquage lorsqu'il dépasse la vitesse limite, il est important, pour sa sécurité, que le couple d'assistance ne disparaisse pas brutalement. A cet effet, l'invention propose une décroissance progressive selon une pente θ$_3$, plus faible que la pente θ$_2$ de "lâcher de volant". La décroissance se poursuit alors selon cette pente θ$_3$ jusqu'à la disparition de l'assistance, tant que le conducteur exerce un couple sur le volant. Par contre, si le conducteur "lâche le volant", la décroissance de l'assistance redevient celle du "lâcher du volant" et se poursuit jusqu'à zéro, selon la pente θ$_2$.

Un braquage prolongé peut amener la crémaillère de direction en fin de course, bloquant ainsi le moteur et provoquant un échauffement inutile et dangereux. La protection du moteur par coupure de son alimentation devant un surcourant est connue. Le circuit électronique de commande du moteur d'assistance comporte un système de protection approprié. Lorsque l'assistance a été suspendue en raison d'un surcourant, l'invention prévoit le rétablissement de l'assistance dès que l'inversion du sens du couple volant par rapport à celui qui a causé le surcourant, est détectée.

## Revendications

1°) Direction assistée électrique de parking comportant un moteur électrique d'assistance à courant continu (1) muni d'un embrayage, un réducteur (2), un capteur de couple volant (3), un capteur de vitesse du véhicule, et un circuit électronique de commande du moteur, caractérisée d'une part en ce que le capteur de couple délivre des signaux tout ou rien, et d'autre part en ce que le taux d'assistance est proportionnel au temps durant lequel le signal de couple est présent lorsque le véhicule roule en dessous d'une vitesse limite préétablie et s'annule lorsque le véhicule dépasse cette vitesse.

2°) Direction assistée selon la revendication 1 caractérisée en ce que le capteur de couple délivre deux signaux de sortie différents selon le sens du couple volant exercé par le conducteur;

3°) Direction assistée selon la revendication 1 caractérisée en ce que le capteur de couple (3) comporte deux contacts (4), un élément élastique d'amplification de déformation angulaire (9) en élastomère, et au moins deux collecteurs tournants (6) associés à des balais (7).

4°) Direction assistée selon la revendication 3 caractérisée en ce que les contacts (4) sont mécaniques.

5°) Direction assistée selon la revendication 3 caractérisée en ce que les contacts (4) sont des contacts Reed actionnés par des aimants (5).

6°) Direction assistée selon les revendications 4 ou 5, caractérisée en ce que le capteur de couple (3) comporte un troisième collecteur tournant (6).

7°) Direction assistée selon la revendication 3 caractérisée en ce que le capteur de couple (3) comporte quatre collecteurs tournants (6), et en ce que les contacts (4) sont des sondes à effet Hall.

**8°)** Direction assistée selon la revendication 1, caractérisée en ce que le sens du couple moteur d'assistance est déterminé par deux relais à contact inverseur $R_1$ et $R_2$ commutant à courant très faible ou à courant nul, qui sélectionnent le sens du courant d'alimentation du moteur (1).

**9°)** Direction assistée selon la revendication 1, caractérisée en ce que l'intensité du courant d'alimentation est déterminée par l'intégration dans le temps des signaux émis par le capteur de couple (3).

**10°)** Direction assistée selon la revendication 1, caractérisée en ce que, en dessous de la vitesse limite, le niveau d'assistance est proportionnel à l'intensité du courant d'alimentation, qui croît selon une pente fixe $\theta_1$ tant que le capteur (3) fournit des signaux de couple.

**11°)** Direction assistée selon la revendication 1, caractérisée en ce que le niveau d'assistance décroît selon une pente fixe $\theta_2$, dite de lâcher de volant, lorsque le capteur (3) cesse d'émettre des signaux de couple.

**12°)** Direction assistée selon la revendication 11, caractérisée en ce que le niveau d'assistance décroît selon une pente fixe $\theta_3$ plus faible que la pente de lâcher de volant $\theta_2$, lorsque le véhicule dépasse la vitesse limite en cours de braquage.

**13°)** Direction assistée selon la revendication 12, caractérisée en ce que la décroissance se poursuit selon la pente $\theta_3$ jusqu'à la disparition du couple d'assistance, tant que le capteur émet des signaux de couple.

**14°)** Direction assistée selon la revendication 12, caractérisée en ce que la décroissance du niveau d'assistance se poursuit selon la pente θ2 de lâcher de volant lorsque le capteur cesse d'émettre des signaux de couple après que le véhicule ait dépassé la vitesse limite

**15°)** Direction assistée selon la revendication 1, caractérisée en ce que le circuit électronique de commande comporte un bloc de commande (18) des relais $R_1$ et $R_2$, recevant les signaux du capteur de couple (3'), un signal courant moteur nul (19'), une unité de commande d'embrayage (17), un intégrateur (11) recevant les signaux du capteur de couple (3'), le signal de vitesse mis en forme (12) et le signal de sécurité moteur (16'), et un organe de mesure du courant moteur ( 15).

**16°)** Direction assistée selon la revendication 15, caractérisée en ce que le circuit électronique de commande comporte un convertisseur analogique digital (13) assurant la transformation du signal analogique (11') fourni par l'intégrateur (11), en une tension à créneau de rapport cyclique variable, une unité de mise en forme (12) du signal de vitesse du véhicule et un double comparateur de courant ( 19).

**17°)** Direction assistée selon la revendication 16, caractérisée en ce que le circuit électronique de commande du moteur comporte deux relais $R_1$, $R_2$ et un semiconducteur de puissance (14) en largeur d'impulsion, assurant la modulation en tension à créneau de rapport cyclique variable, de la tension d'alimentation du moteur.

**18°)** Direction assitée selon la revendication 15, caractérisée en ce que l'organe de mesure (15) du courant moteur délivre un signal (15') qui est comparé dans un bloc à deux niveaux (19) pour générer les informations courant nul (19') et surcourant (19'').

**19°)** Direction assistée selon la revendication 15, caractérisée, en ce que le circuit électronique de commande du moteur comporte un système de protection (16) du moteur assurant la coupure de l'alimentation du moteur devant un signal surcourant (19''), et le rétablissement de l'assistance lorsqu'il détecte l'inversion du sens du couple volant, par rapport à celui qui a causé le surcourant.

# FIG.1

# FIG.2a

# FIG.2b

# FIG. 3

# FIG. 3a

Section AA'

# FIG. 4 a

# FIG. 4 b

# FIG. 4 c

8

# FIG.5

# FIG.6

Office européen
des brevets

**RAPPORT DE RECHERCHE EUROPEENNE**

Numéro de la demande

EP    91 40 2530

Page 1

| **DOCUMENTS CONSIDERES COMME PERTINENTS** | | | |
|---|---|---|---|
| Catégorie | Citation du document avec indication, en cas de besoin, des parties pertinentes | Revendication concernée | CLASSEMENT DE LA DEMANDE (Int. Cl.5 ) |
| A | FR-A-2 577 878 (HONDA)<br><br>* page 2, ligne 33 - page 6, ligne 13 *<br>* page 8, ligne 12 - page 10, ligne 11 *<br>* page 16, ligne 3 - ligne 34 *<br>* page 18, ligne 11 - page 19, ligne 32 *<br>* page 20, ligne 18 - page 21, ligne 3 *<br>* page 30, ligne 11 - page 31, ligne 12 *<br>* page 33, ligne 33 - page 34, ligne 15;<br>revendications 1,2; figures 1-18A *<br>--- | 1,2,<br>9-11,14,<br>17,19 | B62D5/04 |
| A | EP-A-0 249 488 (MITSUBISHI)<br><br>* le document en entier *<br>--- | 1,2,10,<br>11,14 | |
| A | EP-A-0 238 349 (MITSUBISHI)<br>* page 4, ligne 5 - page 5, ligne 24 *<br>* page 7, ligne 8 - page 9, ligne 6 *<br>* page 10, ligne 10 - page 12, ligne 20;<br>revendications 1-8; figures 1-8 *<br>--- | 1,2 | |
| A | FR-A-2 614 985 (PEUGEOT)<br>* page 7, ligne 12 - page 9, ligne 14; figures 1-6 *<br>--- | 3,4 | **DOMAINES TECHNIQUES RECHERCHES (Int. Cl.5 )**<br><br>B62D |
| A | US-A-4 660 671 (BEHR ET.AL)<br>* colonne 2, ligne 47 - colonne 3, ligne 12 *<br>* colonne 6, ligne 9 - colonne 7, ligne 54;<br>revendications 1,2,9; figures 1-13 *<br>--- | 7 | |
| A | GB-A-2 130 537 (AISIN SEIKI)<br>* page 3, ligne 89 - ligne 125; figures 1-5 *<br>--- | 5 | |
| A | DE-A-2 758 308 (BOSCH)<br>* page 4, ligne 8 - page 6, ligne 8 *<br>* page 7, ligne 12 - page 8, ligne 17; figure 1 *<br>---<br><br>-/-- | 4,8 | |

Le présent rapport a été établi pour toutes les revendications

| Lieu de la recherche | Date d'achèvement de la recherche | Examinateur |
|---|---|---|
| LA HAYE | 19 DECEMBRE 1991 | GEYER J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)

Office européen
des brevets

**RAPPORT DE RECHERCHE EUROPEENNE**

Numero de la demande

EP   91 40 2530
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-2 164 303 (HONDA) <br> * page 6, ligne 101 - page 8, ligne 110; figures 1-7 * | 2,15,18 | |
| A | FR-A-2 596 722 (ROLTRA) <br> * page 3, ligne 12 - page 4, ligne 23 * <br> * page 5, ligne 20 - page 6, ligne 24; revendications 1-6; figures 1-3 * | 1,2 | |
| A | EP-A-0 237 178 (TRW) <br> * page 2, ligne 19 - page 3, ligne 19 * <br> * page 5, ligne 29 - page 8, ligne 16; figures 1-3 * | 1,2,17 | |

DOMAINES TECHNIQUES
RECHERCHES (Int. Cl.5 )

Le présent rapport a été établi pour toutes les revendications

| Lieu de la recherche | Date d'achèvement de la recherche | Examinateur |
|---|---|---|
| LA HAYE | 19 DECEMBRE 1991 | GEYER J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................
& : membre de la même famille, document correspondant

EPO FORM 1503 03.82 (P0402)